# EUROPÄISCHE PATENTSCHRIFT

(11) **EP 2 142 823 B1**
(45) Veröffentlichungstag und Bekanntmachung des Hinweises auf die Patenterteilung: **20.06.2012**
(21) Anmeldenummer: 08734481.8
(22) Anmeldetag: 09.04.2008
(51) Int. Cl.: F16G 13/16

(54) **SEITENWANDSEGMENT FÜR EINE LEITUNGSFÜHRUNGSEINRICHTUNG, LEITUNGSFÜHRUNGSEINRICHTUNG MIT SEITENWANDSEGMENT UND VERFAHREN ZUR HERSTELLUNG DES SEITENWANDSEGMENTES**
SIDE WALL SEGMENT FOR A CABLE GUIDE DEVICE, CABLE GUIDE DEVICE HAVING A SIDE WALL SEGMENT, AND METHOD FOR PRODUCING THE SIDE WALL SEGMENT
SEGMENT DE PAROI LATÉRALE POUR DISPOSITIF DE GUIDAGE DE LIGNE, DISPOSITIF DE GUIDAGE DE LIGNE À SEGMENT DE PAROI LATÉRALE, ET PROCÉDÉ DE PRODUCTION DE SEGMENT À PAROI LATÉRALE

(30) Priorität: 13.04.2007 DE 102007017940
(43) Veröffentlichungstag der Anmeldung: 13.01.2010
(73) Patentinhaber: igus GmbH, 51147 Köln (DE)
(72) Erfinder: JAEKER, Thilo-Alexander, 53757 Sankt Augustin (DE)
(74) Vertreter: Lippert, Stachow & Partner
(86) Internationale Anmeldenummer: PCT/DE2008/000605
(87) Internationale Veröffentlichungsnummer: WO 2008/125087

(56) Entgegenhaltungen:
- WO-A-00/13277
- WO-A-01/48885
- DE-A1- 19 840 012
- DE-A1-102006 011 229

## Beschreibung

Die Erfindung betrifft ein Seitenwandsegment für eine Leitungsführungseinrichtung aus verschwenkbar miteinander verbundenen Gliedern, die jeweils zwei gegenüberliegende Seitenteile aufweisen, die in einer Schwenkebene verschwenkbar mit den unmittelbar benachbarten Seitenteilen verbunden sind und Anschläge zur Begrenzung des Verschwenkwinkels aufweisen, wobei mehrere miteinander verbundene Seitenteile das Seitenwandsegment bilden. Die Erfindung betrifft ferner eine Leitungsführungseinrichtung und ein Verfahren zur Herstellung des Seitenwandsegmentes.

Bekannte Leitungsführungseinrichtungen sind beispielsweise in der DE 201 07 003 U1, der DE 198 60 948 C2 und WO01/48885 A1 EP 1 351 362 A2 beschrieben, die jedoch aufwendig im Aufbau, in der Herstellung sowie in der Montage sind.

Der Erfindung liegt daher die Aufgabe zugrunde, ein Seitenwandsegment der eingangs genannten Art bereitzustellen, das einfach aufgebaut, unaufwendiger herstellbar und leicht montierbar ist.

Die gestellte Aufgabe wird erfindungsgemäß dadurch gelöst, dass bei einem Seitenwandsegment der eingangs genannten Art die Seitenteile durch einen in dessen Längsrichtung verlaufenden, in der Schwenkebene biegsamen Verbindungssteg einstückig miteinander verbunden sind und einen im Wesentlichen senkrecht zu diesem Verbindungssteg in der Schwenkebene verlaufenden, in Längsschnitt T-förmigen Steg mit einem Fußsteg und einem Quersteg aufweisen, wobei der Fußsteg mit dem Verbindungssteg verbunden und der Quersteg an dem dem Verbindungssteg gegenüberliegenden Ende des Fußsteges angeordnet ist und die in Längsrichtung des Verbindungssteges weisenden Stirnseiten der Querstege die Anschläge zur Begrenzung des Verschwenkwinkels bilden.

Es wird ein sehr einfach aufgebautes einstückiges Seitenwandsegment mit Verbindungssteg und Stegen vorgeschlagen, wobei die Stege mit ihrer T-Form auf ein Formminimum reduziert sind, das erforderlich ist, einen Leitungsführungskanal der Energieführungskette seitlich zu begrenzen und, mittels der endseitig am Quersteg vorgesehenen Anschläge, eine Begrenzung des Verschwenkwinkels bereitzustellen. Hierbei können die einander zugewandten Anschläge benachbarter Stege eines Seitenwandsegmentes gegeneinander und, in Einbaulage in der Leitungsführungseinrichtung, die bezüglich der Längsrichtung äußeren Stege eines Seitenwandsegmentes gegen den jeweils äußeren, ihnen zugewandten Anschlag des in Längsrichtung benachbarten Seitenwandsegmentes anschlagen. Durch die T-Form kann zudem eine Ersparnis an zu verwendenden Werkstoff für das Seitenwandsegment erzielt werden.

Ferner kann das Seitenwandsegment unaufwendig als einstückiges Bauteil, vorzugsweise als einstückiges Spritzgussteil, hergestellt werden, das zudem, dank der T-Form seiner Stege, nach dem Spritzguss leicht entformbar ist.

Im Prinzip kann das Seitenwandsegment so lang ausgeführt sein, dass es eine einzige durchgehende Seitenwand für die gesamte Leitungsführungseinrichtung bildet.

Bevorzugt kann jedoch das Seitenwandsegment als Teil einer Seitenwand zur seitlichen Begrenzung und/oder als Teil einer Mittelwand zur Teilung eines Leitungsführungskanals der Leitungsführungseinrichtung eingesetzt werden.

Vorzugsweise sind die Stege plattenförmig mit parallel beabstandeten seitlichen Schmalseiten und parallel beabstandeten großen Seitenflächen ausgebildet. Hierbei können ihre seitlichen Schmalseiten jeweils parallel zur Schwenkebene angeordnet sind und sich ihre großen Seitenflächen in einer Querrichtung dazu erstrecken. Diese weitere Formvereinfachung erbringt eine weitere Materialersparnis und eine Vereinfachung in der Herstellung, da damit Hinterschneidungen in einer Entformungsrichtung in Querrichtung bzw. senkrecht zur Schwenkebene vermieden werden können.

In einer bevorzugten Ausführungsform des Seitenwandsegmentes kann der Verbindungssteg ebenfalls plattenförmig mit parallel beabstandeten seitlichen Schmalseiten und parallel beabstandeten großen Seitenflächen ausgebildet sein. Hierbei sind seine seitlichen Schmalseiten jeweils in der Schwenkebene angeordnet. Vorzugsweise können die seitlichen Schmalseiten des Verbindungssteges und diejenigen der Stege in einer gemeinsamen Ebene verlaufen. Das heißt, dass die großen Seitenflächen der Stege sowie des Verbindungssteges die gleiche Erstreckung in Querrichtung aufweisen. Die umhüllende Geometrie des Seitenwandsegmentes ist dann bei einer gestreckten Form des Verbindungssteges eine im Wesentlichen ein flacher Quader, wobei die Schmalseiten der Stege und des Verbindungssteges die parallel zueinander angeordneten Seitenflächen definieren und die Stege und der Verbindungssteg in Querrichtung verlaufende rechtwinklige Durchgangsöffnungen des Seitenwandsegments begrenzen.

Vorteilhafterweise kann die Breite der Schmalseiten der Stege und/oder des Verbindungssteges wesentlich geringer als die der großen Seitenflächen sein. Hierzu kann das Verhältnis der Breite der Schmalseiten der Stege und/oder des Verbindungssteges zu der Breite der großen Seitenflächen der Schmalseiten der Stege und/oder des Verbindungssteges etwa 1:2 bis 1:20, günstigerweise etwa 1:3 bis 1:10 besonders bevorzugt etwa 1:5 betragen. Ein optimales Verhältnis ist unter anderem von den Festigkeitseigenschaften des eingesetzten Werkstoffes für das Seitenwandsegment, von den Längserstreckungen der Stege bzw. den Gesamtabmessungen der Stege und von der zu erwarteten Belastung abhängig. Dank der schmalen T-Form der Stege und/oder des Verbindungssteges ist eine leichte Flexibilität des Seitenwandsegmentes erzielbar. Ein verminderter Werkstoffbedarf bedeutet auch eine geringere träge Masse des Seitenwandsegmentes, das eine leichte Beweglichkeit des Seitenwandsegmentes fördern kann.

Ferner können die Stege jeweils gleich beabstandet zu ihren benachbarten Stegen sein. Vorzugsweise sind die in der Streckposition des Seitenwandsegmentes, in der der Verbindungssteg ungekrümmt ist, senkrecht zu dem Verbindungssteg angeordnet. Diese regelmäßige und reihensymmetrische Anordnung erleichtert die Herstellung. Zweckmäßigerweise sind auch die in Einbaulage in der Leitungsführungseinrichtung gegenüberliegenden äußeren Stege zweier benachbarter Seitenwandsegmente in demselben Abstand zueinander wie die Stege der Seitenwandelsegmente angeordnet. Dadurch ergibt sich in Einbaulage in der Leitungsführungseinrichtung eine gleichmäßige Reihung der Stege, so dass die mechanischen Eigenschaften der Leitungsführungseinrichtung über ihre Längserstreckung im Bezug auf die Stege im Wesentlichen gleichbleibend sein können.

Die Stege eines Seitenwandsegments können als erste Stege sich von einer ersten Seite des Verbindungssteges aus erstrecken. Die jeweils paarig einander gegenüberliegenden Anschläge können dann in der Streckposition des Seitenwandsegmentes, in der der das Seitenwandsegment gestreckt oder nahezu gestreckt ist, aneinander anliegen. Hierzu sind die Querstege der ersten Stege in ihrer Längserstreckung so ausgebildet, dass ihre Anschläge in der Streckposition zur Anlage kommen.

Die Stege können auch als zweite Stege sich von einer der ersten Seite abgewandten zweiten Seite des Verbindungssteges aus erstrecken, wobei und deren jeweils paarig einander gegenüberliegenden Anschläge in der Biegeposition des Seitenwandsegmentes, in der der das Seitenwandsegment in der Schwenkebene gebogen ist, aneinander anliegen. Die Leitungsführungseinrichtung kann üblicherweise über einen Verfahrweg unter Ausbildung eines ersten Trums, eines Umlenkbereichs und eines Trums in der Schwenkebene verfahrbar sein, wobei das Seitenelement sich im Umlenkbereich in der Biegeposition und in den Trumen in der Streckposition befindet. Hierbei ist die zweite Seite des Verbindungssteges jeweils zum Innenraum zwischen den Trumen hin gerichtet, während die erste Seite abgewandt von der zweiten Seite und damit nach außen gewandt ist. Die Querstege der zweiten Stege sind in ihrer Längserstreckung so ausgebildet, dass ihre Anschläge in der Biegeposition zur Anlage kommen, während sie in der Streckposition voneinander beabstandet sind und die Querstege der ersten Stege sind in ihrer Längserstreckung so ausgebildet, dass ihre Anschläge in der Streckposition zur Anlage kommen, während sie in der Biegeposition voneinander beabstandet sind. Somit wird das Seitenelement im Wesentlichen bis auf Übergangsbereiche von den Trumen in den Umlenkbereich durch die Anlage der Anschläge mechanisch stabilisiert

Jeweils ein erster und ein zweiter Steg können bezüglich ihrer Fußstege in einer Flucht zueinander angeordnet sein und einen Kreuzungspunkt mit dem Verbindungssteg bilden. Zur Materialersparnis und zur besseren Flexibilität des Seitenwandsegments im Kreuzungspunkt kann dieser eine mittige, senkrecht zur Schwenkebene verlaufende Durchgangsbohrung aufweisen.

Der Verbindungssteg kann bezüglich seiner relativen Lage zu den Anschlägen der sich beidseitig von ihm erstreckenden ersten und zweiten Stegen außermittig zu den Anschlägen angeordnet sein, wobei die Anschläge des ersten Steges weiter als die des zweiten Steges von dem Verbindungssteg beabstandet sind. Dies ermöglicht bei gleich bleibendem Abstand zwischen den Stegen einen größeren durch die Anschläge begrenzten Verschwenkwinkel als bei einer mittigen Anordnung des Verbindungssteges.

In einer bevorzugten Weiterbildung des Seitenwandsegmentes sind die jeweils an benachbarten Stegen angeordneten und einander zugewandten Anschläge als Steckverbindungen ausgestaltet. Dies ermöglicht eine Erhöhung der mechanischen Stabilität des Seitenwandsegmentes. Vorzugsweise weist hierzu ein Anschlag eine senkrecht zur Schwenkebene verlaufende, vorzugsweise V-förmige Stecknut auf, während jeweils der andere Anschlag einen in Form und Ausrichtung der Stecknut angepassten Steckvorsprung zum Eingriff in die Stecknut in der Anschlagposition umfasst. Somit können über die Steckverbindung zusätzlich Kräfte in Längsrichtung der Stege übertragen werden, so dass ein Abrutschen der Anschläge in dieser Richtung verhindert werden kann. Diese Steckverbindung wird automatisch dann hergestellt, wenn die Anschläge zur Anlage kommen.

Vorteilhaft sind endseitig des Verbindungsstegs als Steckelemente ausgebildete Verbindungsmittel zur Verbindung des Seitenwandsegmentes mit in der Leitungsführungseinrichtung benachbarten Seitenwandsegmenten in einer Verbindungsposition vorgesehen. Somit können zwei Seitenwandsegmente auf einfache Weise endseitig miteinander verbunden werden. Hierbei können in der Verbindungsposition zugewandte Steckelemente benachbarten. Seitenwandsegmente jeweils ein Steckpaar bilden und in einer Steckrichtung senkrecht zur Schwenkebene ineinander steckbar sein.

Als vorteilhaft wird angesehen, dass ein Steckelement eines Steckpaares einen Steckvorsprung mit einer bezüglich der Schwenkebene pfeilartigen Querschnittsform aufweist und das andere Steckelement des Steckpaares eine der Pfeilform angepasste, sich in Steckrichtung erstreckende Stecköffnung zur Aufnahme des Steckvorsprunges aufweist. Somit kann eine Kraftübertragung in der Schwenkebene und, infolge von bevorzugt vorgesehener Reibhaftung zwischen den Steckelementen auch in Steckrichtung erfolgen. Reibung erhöhend wirkt sich die Pfeilform mit ihren vorzugsweise ausgeprägten Hinterschneidungen aus, mittels derer die Pfeilform im Querschnitt linienhafter werden kann, da hierdurch die Kontaktflächen zwischen den Steckelementen vergrößert werden.

Zur Verbindung des Seitenwandsegmentes mit einer Traverse zur Ausbildung eines Leitungsführungskanals können die Stege vorzugsweise jeweils an den einander zugewandten größeren Seitenflächen ein Verbindungselement aufweisen. Das Verbindungselement kann als Rastvorsprung ausgebildet sein, der sich in Längserstreckung des Verbindungssteges erstreckt sowie vorzugsweise mittig auf der zugehörigen Seitenfläche und in Längserstreckung des Fußsteges verlaufend angeordnet ist. Somit können in Einbaulage über eine Rastverbindung mit der Traverse Kräfte senkrecht zur Schwenkebene übertragen werden.

Besonders bevorzugt ist eine Ausführung des Seitenwandsegmentes, bei der es in einer Ruheposition, in der es mechanisch unbelastet ist, eine gekrümmte Form mit einer in der Schwenkebene liegenden Krümmung aufweist. Diese Krümmung liegt zweckmäßiger zwischen der durch die Streckposition definierten Krümmung und der durch die Biegeposition definierten Krümmung. Dadurch kann das Seitenwandsegment in die Biegeposition hinein sowie in die Streckposition hinein vorgespannt werden. Dies kann in Einbaulage in der Leitungsführungseinrichtung bewirken, dass ein Trum infolge der Vorspannung in die Strecklage hinein weniger durchhängt oder sogar einen nach oben gewölbten Bogen ausbildet. Ferner können infolge der Vorspannung in der Biegeposition die Glieder leichter aus der Biegeposition im Umlenkbereich heraus in die Streckposition im Obertrum bzw. im Untertrum geführt werden. Vorzugsweise verläuft die Krümmung in Ruhelage stetig, insbesondere kreisbogenförmig oder etwa kreisbogenförmig mit einem Kreismittelpunkt. Somit können die ersten Stege in Ruhelage in Richtung von und die zweiten Stege zu dem Kreismittelpunkt hin sich erstreckend ausgebildet sein.

Das Seitenwandsegment kann in einer alternativen Ausführungsform in der Ruheposition, in der es mechanisch unbelastet ist, gleich seiner Streckposition gestreckt oder nahezu gestreckt sein.

Zur Lösung der Aufgabe kann eine Leitungsführungseinrichtung zur Führung von Schläuchen, Kabeln oder dergleichen in einem Leitungsführungskanal aus verschwenkbar miteinander verbundenen Gliedern bereitgestellt werden, die jeweils zwei gegenüberliegende Seitenteile aufweisen, die in einer Schwenkebene verschwenkbar mit den unmittelbar benachbarten Seitenteilen verbunden sind und Anschläge zur Begrenzung des Verschwenkwinkels aufweisen, wobei mehrere miteinander verbundene Seitenteile ein Seitenwandsegment gemäß einer der zuvor beschriebenen Ausführungsformen bilden und zumindest ein Paar gegenüberliegender Seitenteile mittels einer Traverse miteinander verbunden ist.

Die Seitenwandsegmente können zum Aufbau der Leitungsführungseinrichtung endseitig ihrer Verbindungsstege zu einer Seitenwand miteinander verbunden werden. Hierbei können an der Seitenwand in bestimmten Abständen Schlaufen, zum Beispiel in Form von Kabelbindern, zur Fixierung von Schläuchen, Kabeln oder anderen flexiblen Leitungen an der Seitenwand angebracht sein.

Vorzugsweise sind jedoch in der Leitungsführungseinrichtung zur Begrenzung des Leitungsführungskanals zwei Seitenwände parallel zueinander angeordnet und an vorzugsweise wenigen Gliedern mittels einer Traverse verbunden.

Die Traverse kann mindestens einen Traverssteg vorzugsweise zwei Traversstege, die den Leitungsführungskanal in Einbaulage oben und unten begrenzen, oder einen umfänglich geschlossenen Leitungsführungskanalabschnitt mit vorzugsweise rechtwinkligem Querschnitt aufweisen. Zum Anschluss der Traversstege oder des Leitungsführungskanalabschnittes können Anschlusselemente vorgesehen sein, mittels derer der Traversensteg oder der Leitungsführungskanalabschnitt form- und/oder kraftschlüssig mit den Seitenwandsegmenten verbindbar und vorzugsweise wieder von denselben lösbar sind. Die Anschlusselemente sind vorzugsweise so ausgelegt, dass sie jeweils mit einem Traverssteg und mit einem Seitenwandsegment vorzugsweise verrastbar sind oder dass sie einstückig mit dem jeweiligen Leitungsführungskanalabschnitt verbunden und mit einem Seitenwandsegment vorzugsweise verrastbar sind.

Die Seitenwandsegmente können bereits zuvor beschriebene, als Rastvorsprünge ausgebildete Verbindungselemente aufweisen, wobei vorzugsweise vorgesehen ist, dass die Anschlusselemente mindestens ein klauenartig ausgebildetes Rasthakenpaar aufweisen. Diese können den Fußsteg federbelastet seitlich umgreifen und an einem dort vorgesehenen, weiter oben bereits beschriebenen Rastvorsprung verrasten. Der Rastvorsprung kann zum festerem Verrasten eine Hinterschneidung aufweisen. Das Anschlusselement mit den Rasthakenpaar muss somit lediglich auf den Fußsteg seitlich bis zur Erreichen einer Rastposition aufgeschoben werden. Zweckmäßigerweise sind die Rasthaken so bemessen, das der Fußsteg in der Verrastungsposition mit seiner Schmalseite an dem Anschlusselement bzw. an dem Leitungsführungskanalabschnitt anschlägt.

Zur Ausbildung einer Steckverbindung zwischen dem Traverssteg und dem Anschlusselement kann dasselbe einen sich senkrecht zur Schwenkebene erstreckenden Anschlusssteg mit in Querrichtung vorzugsweise T-förmigem Querschnitt aufweisen. Entsprechend kann der Traverssteg endseitig jeweils eine Anschlussnut umfassen, die dem ihr zugeordneten Anschlusssteg angepasst ist und in die dieser Anschlusssteg zur Herstellung einer lösbaren Verbindung mit dem Traverssteg eingreift. Vorzugsweise ist der Anschlusssteg plattenförmig mit Schmalseiten in Querrichtung und in Längsrichtung des Seitenwandsegmentes ausgebildet, wodurch eine möglichst Raum sparende Begrenzung des Leitungsführungskanals und eine Verdrehsicherung von Anschlusssteg und Anschlussnut erzielt werden kann.

In einer Weiterbildung der Steckverbindung können an dem freien Ende des Anschlusssteges mindestens ein Rastvorsprung, vorzugsweise zwei Rastvorsprünge vorgesehen sein, die sich in Einbaulage in Längsrichtung des Steges erstrecken und die in Einbaulage in einer Rastposition in vorgesehene Rastöffnungen am Traverssteg eingreifen. Vorteilhaft können die beiden Rastvorsprünge nebeneinander und bezüglich der Querrichtung in einer Höhe angeordnet sein. Dadurch wird mit dem Rasthakenpaar, den Anschlussstegen und den Rastvorsprüngen eine stabile Steck-Rast-Verbindung zwischen dem jeweiligen Seitenwandsegment und dem Traverssteg ausgebildet, über die Kräfte und Kraftmomente aller Richtungen übertragen werden können.

Die Leitungsführungseinrichtung kann also aus Bauteilen aufgebaut sein, die mittels Steckverbindungen oder Rastverbindungen miteinander verbindbar und wieder lösbar sind. Somit kann die Leitungsführungseinrichtung nach einem Baukastenprinzip in gewünschten Abmessungen aus entsprechend dimensionierten Bauteilen zusammengebaut werden, wobei zum Beispiel die Verbindungsstege in ihrer Länge entsprechend einer gewünschten Breite des Leitungsführungskanals dimensioniert eingesetzt werden können. Es können somit in ihren Größen vorzugsweise standardisierte Bauteile zum Zusammenbau einer Leitungsführungseinrichtung vorgesehen sein, die sich zur Variation in den Abmessungen der Leitungsführungseinrichtung miteinander kombinieren lassen.

Es versteht sich, dass Seitenwandsegment, Traverssteg, Anschlusselemente und/oder Leitungsführungskanalabschnitt jeweils einstückige Gussteile, insbesondere Kunststoffspritzgussteile sein können.

Zur Lösung der Aufgabe wird ein Verfahren zur Herstellung eines Seitenwandsegmentes gemäß einer der zuvor beschriebenen Ausführungsformen für eine Leitungsführungseinrichtung gemäß einer der zuvor beschriebenen Ausführungsformen aus verschwenkbar miteinander verbundenen Gliedern vorgeschlagen, das folgende Verfahrensschritte aufweist:
o Gießen, insbesondere Spritzgießen des Seitenwandsegmentes, wobei das Seitenwandsegment eine in der Schwenkebene gekrümmte Form aufweist, in der die Anschläge beabstandet zueinander angeordnet sind,
o Beaufschlagen des gegossenen Seitenwandsegmentes in einer Spannform mit einer mechanischen Vorspannung, mittels derer das Seitenwandsegment in eine bestimmte, in der Schwenkebene liegende Krümmung gebracht wird, die kleiner oder gleich als derjenigen des Seitenwandsegmentes in der Biegeposition ist, oder mittels derer das Seitenwandsegment auf eine gestreckte oder im Wesentlichen gestreckte Form gebracht wird und
o Wärmebehandlung des Seitenwandsegmentes in der Spannform unter einer Temperatur, unter der das mit der mechanischen Vorspannung beaufschlagte Seitenwandsegment zumindest teilweise entspannt.

Anschließend kann das Seitenwandsegment aus der Spannform ausgespannt werden.

Mit Hilfe dieses Verfahrens ist es möglich, ein Seitenwandsegment zu fertigen, das sich in der Streckposition oder in der Biegeposition befindet, in der die Anschläge der ersten Stege bzw. die der zweiten Stege anliegen, da, bedingt durch das Gießen die Anschläge noch nicht wärmebehandelten Seitenwandsegmentes beabstandet sind. Durch das Beaufschlagen des gegossenen Seitenwandsegmentes mit einer Vorspannung und die anschließende Wärmebehandlung kann das Seitenwandsegment in eine gewünschte gekrümmte Form gebracht werden, in der die Anschläge in eine bestimmte Position zueinander gebracht werden. Diese kann eine Anlage der Anschläge der ersten Stege oder eine Anlage der Anschläge der zweiten Stege sein. Zur Erzeugung einer Vorspannung in Einbaulage des Seitenwandsegmentes in der Leitungsführungseinrichtung kann auch vorgesehen sein, dass das Seitenwandsegment in eine Krümmungsposition mit einer Krümmung gebracht wird, die zwischen der der Biegeposition und der der Streckposition liegt.

Alternativ oder auch zusätzlich kann das Seitenwandsegment auch aus mehreren Kunststoffen aufgebaut sein und hierbei vorzugsweise mittels eines Mehrkomponentengussverfahren, insbesondere durch ein Mehrkomponentenspritzgussverfahren, hergestellt sein. Hierbei können die Kunststoffe hinsichtlich ihrer mechanischen Eigenschaften so ausgewählt sein, dass sie die mechanische Funktion des jeweiligen Teiles des Seitenwandsegmentes unterstützen. Hierzu kann zum Beispiel für den Verbindungssteg ein flexibler Kunststoff vorgesehen sein, während derjenige der Stege eine besondere Stützfähigkeit oder mechanische Stabilität aufweisen kann. Alternativ könnten auch verschiedene Kunststoffe mit beispielsweise unterschiedlichen Erstarrungstemperaturen eingesetzt werden.

In einer Verfahrensvariante kann nach der Wärmebehandlung und vor dem Ausspannen ein Abkühlen des Seitenwandsegmentes in der Spannform erfolgen.

Die vorliegende Erfindung wird im Folgenden anhand mehrerer in einer Zeichnung dargestellter Ausführungsformen näher erläutert. In der Zeichnung zeigen:
- Fig. 1: eine Seitenansicht eines Seitenwandsegmentes,
- Fig. 1a: eine Schnittansicht gemäß dem in Figur 1 eingezeichneten Schnittverlauf A-A,
- Fig. 2: eine perspektivische Ansicht eines Abschnittes.einer Leitungsführungseinrichtung mit Seitenwandsegmenten gemäß Figur 1,
- Fig. 3: eine Seitenansicht der Leitungsführungseinrichtung gemäß Figur 2,
- Fig. 3a: eine Schnittansicht gemäß dem Schnittverlauf G-G in Figur 3,
- Fig. 4: eine perspektivische Ansicht einer ersten Ausführungsform einer Traverse für die Leitungsführungseinrichtung gemäß Figur 2,
- Fig. 5: eine Seitenansicht der Traverse gemäß Figur 4,
- Fig. 6: eine Stirnseitenansicht der Traverse gemäß Figur 4,
- Fig. 7: eine Draufsicht auf die Traverse gemäß Figur 4,
- Fig. 8: eine perspektivische Ansicht einer ersten Ausführungsform eines Anschlusselementes, für die erste Ausführungsform der Traverse gemäß Figur 4,
- Fig. 9: eine Seitenansicht des Anschlusselementes gemäß Figur 8, Figur 10 eine stirnseitige Ansicht des Anschlusselementes gemäß Figur 8,
- Fig. 11: eine Draufsicht auf das aus Anschlusselement gemäß Figur 8,
- Fig. 12: eine perspektivische Ansicht einer zweiten Ausführungsform der Traverse,
- Fig. 13: eine Seitenansicht der Traverse gemäß Figur 12,
- Fig. 14: eine stirnseitige Ansicht der Traverse gemäß Figur 12 und
- Fig. 15: eine Draufsicht auf die Traverse gemäß Figur 12

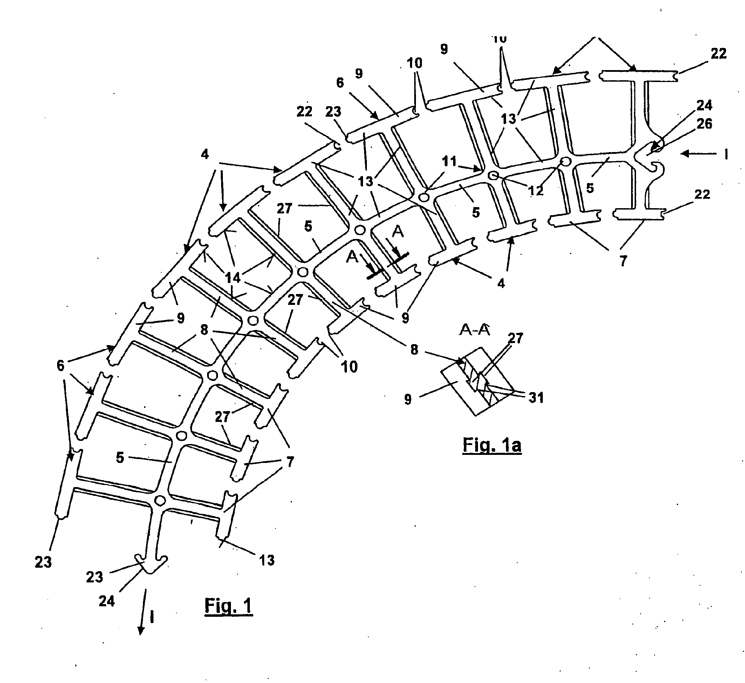

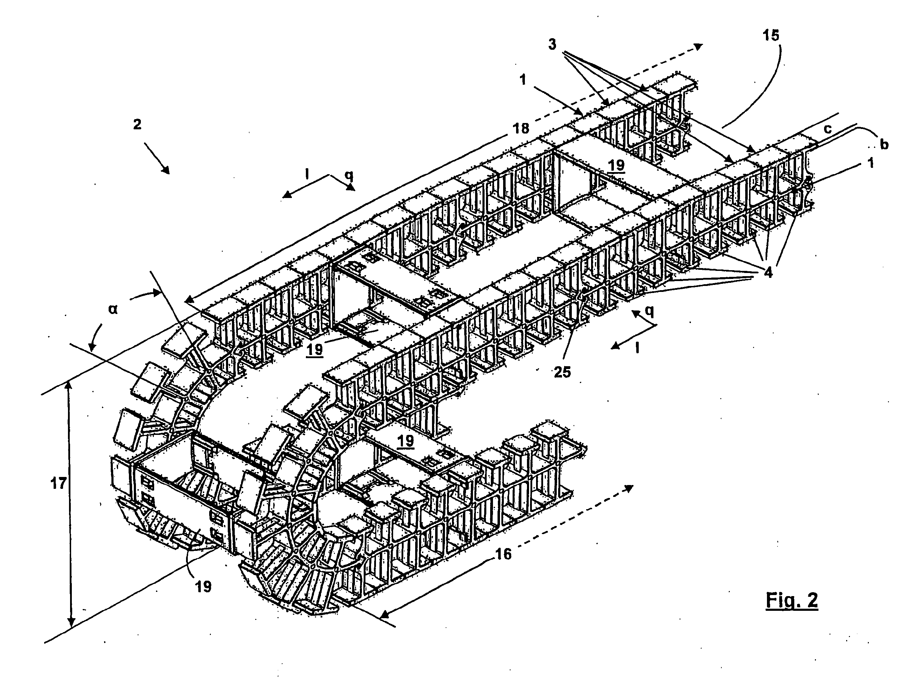

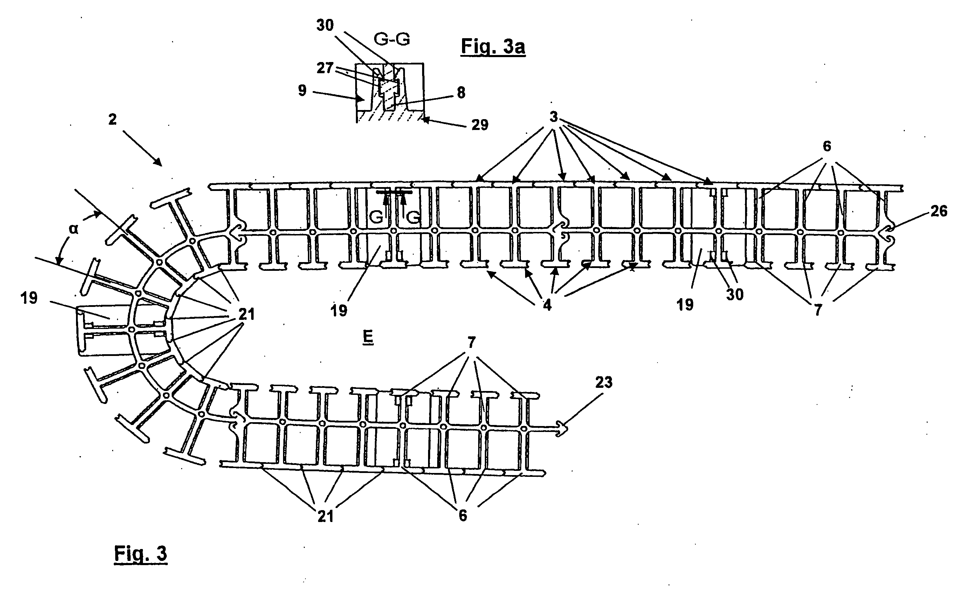

In Figur 1 zeigt eine Seitenansicht eines Seitenwandsegmentes 1 für eine in Figur 2 dargestellte Leitungsführungseinrichtung 2 aus verschwenkbar miteinander verbundenen Gliedern 3, die in einer Schwenkebene E, welche in Figur 1 und 3 gleich der Zeichnungsebene ist, verschwenkbar sind. Das Seitenwandsegment 1 weist mehrere Seitenteile 4 auf, die durch einen in Längsrichtung 1 verlaufenden, in der Schwenkebene E biegsamen Verbindungssteg 5 einstückig miteinander verbunden sind. Die Seitenteile 4 weisen jeweils einen ersten Steg 6 und einen zweiten Steg 7 mit jeweils einem Fußsteg 8 und einem Quersteg 9 auf, wobei der Fußsteg 8 mit dem Verbindungssteg 5 verbunden ist und der Quersteg 9 an den dem Verbindungssteg 5 gegenüberliegenden Ende des Fußsteges 8 angeordnet ist. Die Querstege 9 weisen an ihren in Längsrichtung 1 des Verbindungssteges 5 weisenden Stirnseiten Anschläge 10 zur Begrenzung eines in Figur 2 und 3 dargestellten Verschwenkwinkels α. Hierbei sind jeweils ein erster Steg 6 und ein zweiter Steg 7 in einer Flucht zueinander ausgerichtet angeordnet und bilden mit dem Verbindungssteg 5 einen Kreuzungspunkt 11, der eine mittige, senkrecht zur Schwenkebene E verlaufende Durchgangsbohrung 12 aufweist.

Der Verbindungssteg 5 ist bezüglich seiner relativen Lage zu den Anschlägen 10 der sich beidseitig von ihm erstreckenden Stege 6, 7 außermittig zu den Anschlägen 10 angeordnet, wobei die Anschläge 10 des ersten Steges 6 weiter als die des zweiten Steges 7 von dem Verbindungssteg 5 beabstandet sind.

Die Stege 5, 6, 7 sind plattenförmig mit parallel beabstandeten Schmalseiten 13 und parallel beabstandeten großen Seitenflächen 14 ausgebildet. Bis auf die Schmalseiten 13, die zugleich die Stirnseiten des Quersteges 9 mit den Anschlägen 10 bilden, sind die Schmalseiten 13 in der Schwenkebene E angeordnet. Senkrecht zur Schwenkebene E und in einer Querrichtung q erstrecken sich großen Seitenflächen 14. Eine Breite b der Schmalseite 13 der Stege 6, 7 und des Verbindungssteges 5 weisen zu einer Breite c der großen Seitenfläche 14 der Stege 6, 7 und das Verbindungssteges 5 ein Verhältnis von etwa 1:5 auf. Die Stege 6, 7 sind jeweils gleich beabstandet zu ihren benachbarten Stegen 6, 7 und sind in der in Figur 2 dargestellten Streckposition des Seitenwandsegmentes 1 senkrecht zu dem Verbindungssteg 5 angeordnet.

Die Figuren 2 und 3 zeigen jeweils einen Abschnitt der Leitungsführungseinrichtung 2 zur Führung von hier nicht dargestellten Schläuchen, Kabeln und/oder andere flexiblen Leitungen in einem Leitungsführungskanal mit einer Vielzahl gelenkig miteinander verbundenen Gliedern 3. Die Leitungsführungseinrichtung 2 ist über einen hier nicht eingezeichneten Verfahrweg unter Ausbildung eines Untertrums 16, eines Umlenkbereiches 17 und eines oberhalb des Untertrums 16 geführten Obertrums 18 in der Schwenkebene E verfahrbar. Die Glieder 3 weisen zwei Seitenteile 4 auf, die hier in einigen wenigen Fällen durch eine Traverse 19 miteinander verbunden sind. Benachbarte Seitenwandsegmente 1 sind über endseitig ihrer Verbindungsstege 5 vorgesehene, paarweise zusammenwirkende Verbindungsmittel 20 gelenkig miteinander verbunden.

In dem Untertrum 16 und dem Obertrum 18 befinden sich die Seitenwandsegmente 1 in einer Streckposition, in der die an den Querstegen 9 der ersten Stegen 6 angeordneten Anschläge 10 aneinander anliegen, während die Anschläge 10 der Querstege 9 der zweiten Stege 7 voneinander beabstandet sind. In dem Umlenkbereich 17 befinden sich die Seitenwandsegmente 1 in einer Biegeposition, in der das Seitenwandsegment 1 gegenüber einem benachbarten Seitenwandsegment 1 um den Verschwenkwinkel α verschwenkt ist. Hierbei liegen die Anschläge 10 der Querstege 9 der zweiten Stege aneinander an, während die Anschläge 10 der Querstege 9 der ersten Stege 6 maximal voneinander beabstandet sind.

Die an benachbarten Querstegen 9 angeordneten und einander zugewandten Anschläge 10 bilden ein Anschlagspaar 21, die, in Längsrichtung 1 gegeneinander geführt, eine Steckverbindung ausbilden. Hierzu weist ein Anschlag 10 eines Anschlagpaares 21 eine senkrechte Schwenkebene.E verlaufende V-förmige Stecknut 22 auf, während der andere Anschlag 10 des Anschlagpaares 21 einen der Stecknut 22 angepassten Steckvorsprung 23 aufweist, wobei die Anschläge 10 mit Anliegen ineinander greifen. Über diese Steckverbindung können Kräfte senkrecht zur Längsrichtung 1 und in der Schwenkebene E übertragen werden.

Die endseitig am Verbindungssteg 5 vorgesehenen Verbindungsmittel 20 sind als Steckelemente 23 ausgebildet, wobei in einer in Figur 2 und 3 dargestellten Verbindungsposition zugewandte Steckelemente 24 benachbarter Seitenwandsegmente 1 jeweils ein Steckpaar 25 ausbilden und in einer Steckrichtung senkrecht zur Schwenkebene E und gleich der Querrichtung q ineinander steckbar sind. Hierbei ist ein Steckelement eines Steckpaares 25 als Steckvorsprung 23 mit einer bezüglich der Schwenkebene E pfeilartigen Querschnittsform ausgebildet. Das andere Steckelement 24 des Steckpaares 25 weist eine der Pfeilform angepasste, sich in Querrichtung q erstreckende Stecköffnung 26 zur Aufnahme des Steckvorsprunges 23 auf. Durch diese Ausbildung der Steckverbindung können Kräfte in der Schwenkebene E übertragen werden. Wie der Figur 3 entnehmbar, ist der pfeilartige Steckvorsprung 23 eng anliegend in der Stecköffnung 26 angeordnet, so dass über diese Steckverbindung infolge von Reibung auch Kräfte senkrecht zur Schwenkebene E übertragen werden. Durch die pfeilartige Ausbildung des Steckvorsprunges 23 wird zudem die Kontaktfläche zwischen Steckvorsprung 23 und Stecköffnung 26 und damit auftretende Reibungskräfte vergrößert, wodurch eine weitergehende Kraftübertragung senkrecht zur Schwenkebene E möglich wird.

Wie deutlich in Figur 1a und 3a ersichtlich, weisen die Fußstege 8 der Stege 6, 7 beidseitig einen Rastvorsprung 23 mit schwalbenschwanzförmigem Querschnitt auf. Dieser ist, wie in Figur 2 ersichtlich, mittig auf der zugehörigen großen Seitenfläche 14 des Fußsteges 8 angeordnet, erstreckt sich in Längserstreckung 1 des Verbindungssteges 5 und verläuft in Längserstreckung des Fußsteges 8 und damit senkrecht zum Verbindungssteg 5. Der Rastvorsprung 27 dient zur Verbindung des Seitenwandsegmentes 1 mit der Traverse 19. Obwohl jeder der Fußstege 8 der Stege 6, 7 einen Rastvorsprung 27 aufweist und somit optional jeweils eine Traverse 19 daran befestigt werden kann, muss zu einer wirksamen Begrenzung des Leitungsführungskanals 15 nicht an jedem Fußsteg 8 eine Traverse 19 befestigt sein. Beispielgebend sind in Figur 2 und 3 sind nur wenige Seitenteile 4 der Glieder 3 über eine Traverse 19 verbunden.

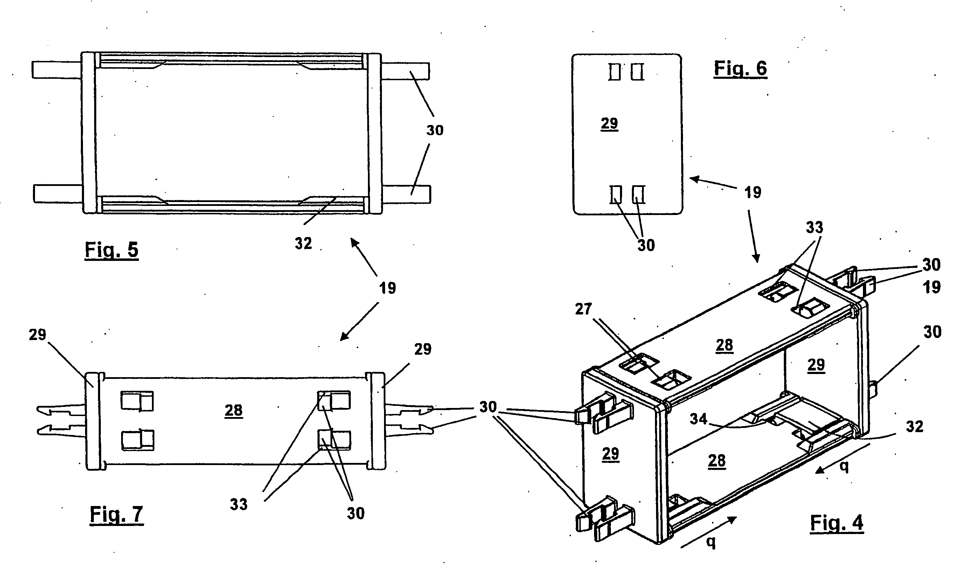

Die Traversen 19 sind hier in den Figuren beispielgebend in zwei Ausführungsformen gezeigt, die in den nachfolgenden Figuren 4 bis 15 detaillierter dargestellt sind. In den Figuren 4 bis 7 wird die erste Ausführungsform der Traverse 19 gezeigt, wobei diese zugleich in Figur 2 bei den in der Zeichnung vorderen drei Traversen verwandt wird. Diese erste Ausführungsform der Traverse 19 weist zwei Traversstege 28 und die Traversstege 28 verbindende Anschlusselemente 29 auf, über die Traverse 19 mit den Rastvorsprüngen 27 der Seitenwandsegmente 1 verbindbar und von denselben wieder lösbar sind. Hierzu weisen die Anschlusselemente 29 jeweils zwei klauenartig ausgebildete Rasthakenpaare 30 auf, die zur Ausbildung einer Rastverbindung die zugeordneten Fußstege der Stege 6, 7 und elastischer Auslenkung seitlich umgreifen und an dem Rastvorsprung 27 rasten, wobei das Rasthakenpaar 30 in die Hinterschneidung 31 des schwalbenförmigen Rastvorsprunges 27 eingreift. Diese Rastposition stützt sich die dem Anschlusselement 29 zugewandte Schmalseite 13 des Fußsteges 8 an dem Anschlusselement 29 ab. Die Verrastungsposition des Rasthakenpaares 30 an dem Rastvorsprung 27 wird insbesondere in Figur 3a deutlich gezeigt.

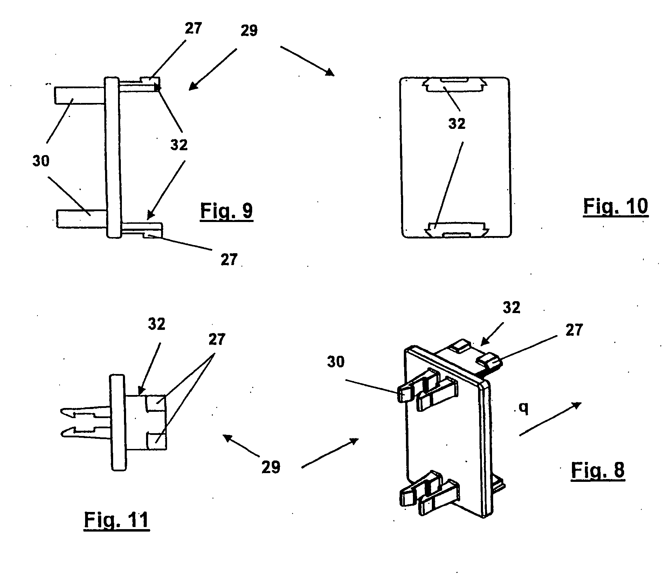

Die Figuren 8 bis 11 zeigen das Anschlusselement 29 der ersten Ausführungsform der Traverse 19. Das Anschlusselement 29 weist zwei sich in Querrichtung q erstreckende Anschlussstege 32 mit, wie in Figur 10 ersichtlich, schwalbenschwanzförmigen Querschnitt auf. Endseitig der Anschlussstege sind jeweils zwei Rastvorsprünge 27 vorgesehen, die in in Figur 4 bis 7 gezeigten Einbaulage in einer Rastposition in vorgesehene Rastöffnungen 33 am jeweiligen Traverssteg 28 eingreifen. In Einbaulage liegen die Traversstege 28 endstirnseitig an den Anschlusselementen 29 an und werden durch die paarig angeordneten und in die jeweils zugeordnete Rastöffnung 33 eingreifenden Rastvorsprünge stirnseitig gegen die Anschlusselemente 29 gedrückt. Hierbei liegen die Rastvorsprünge 27 jeweils an einer Seite der Rastöffnung 33 an, die der jeweils benachbarten Rastöffnung 33 zugewandt ist. Die Traversstege 28 weisen zur Aufnahme des jeweils zugeordneten Anschlusssteges 32 eine entsprechend schwalbenschwanzförmig ausgebildete Anschlussnut 34 auf, in die die Anschlusswege 32 gesteckt werden, bis die Rastvorsprünge 27 in den Rastöffnungen 31 einrastet und die Traversstege 28 endstirnseitig an den Anschlusselementen 29 anliegen. Somit wird über Steck-RastVerbindungen eine stabile Befestigung der Traversstege 28 an den Anschlusselementen 29 und weitergehend eine feste Verbindung der Anschlusselemente 29 an den Seitenwandsegmenten 1 erzielt.

Wie aus den Ausführungen ersichtlich, besteht die Leitungsführungseinrichtung 2 mit den Seitenwandsegmenten 1 und den Traverse 19 aus Bauteilen, die mittels Steckverbindungen und/oder Rastverbindungen zusammensteckbar bzw. miteinander verbindbar sind. Somit kann die Leitungsführungseinrichtung 2 nach einem Baukastenprinzip zu gewünschten Abmessungen aus entsprechend dimensionierten Bauteilen zusammengebaut werden. Die hier in den Ausführungsformen gezeigten Abmessungen sind nur Beispiel gebend. Somit kann der Leitungsführungskanal 15 beispielsweise wesentlich breiter ausgebildet sein. Desgleichen kann die Leitungsführungseinrichtung 2 in ihrer Längenerstreckung variiert werden.

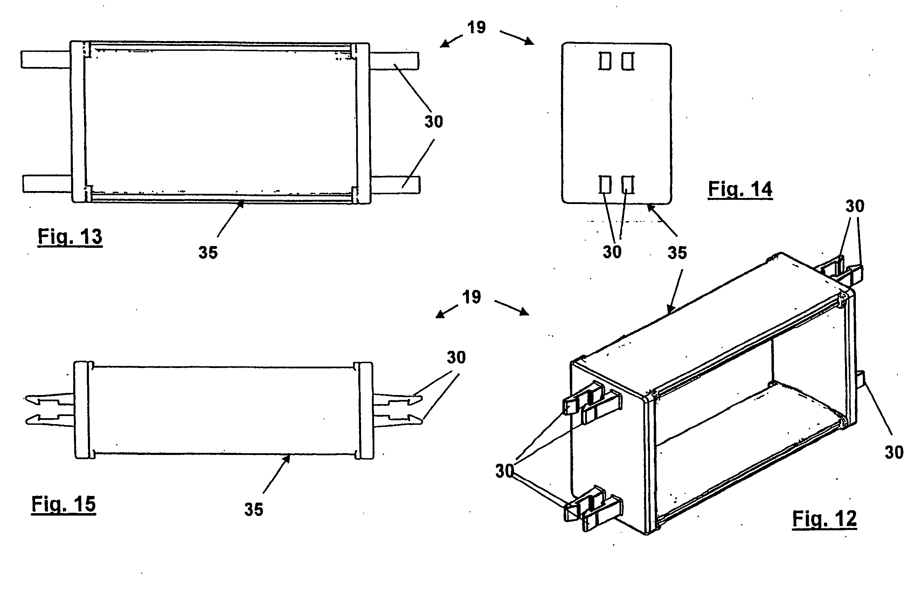

In der in den Figuren 12 bis 15 dargestellten zweiten Ausführungsform ist die Traverse 19 einstückig ausgeführt und weist einen einstückigen Leitungsführungskanalabschnitt 25 mit Anschlusselementen 29 auf. Diese Anschlusselemente 29 sind hier das Rasthakenpaar 30. Sie können in gleicher Weise wie in der ersten Ausführungsform der Traverse 19 mit den Rastvorsprüngen 27 an den Fußstegen 8 in einer Steck-Rast-Verbindung verrasten.

### Bezugzeichenliste

- 1: Seitenwandsegment
- 2: Leitungsführungseinrichtung
- 3: Glied
- 4: Seitenteil
- 5: Verbindungssteg
- 6: erster Steg
- 7: zweiter Steg
- 8: Fußsteg
- 9: Quersteg
- 10: Anschlag
- 11: Kreuzungspunkt
- 12: Durchgangsbohrung
- 13: Schmalseite
- 14: Seitenfläche
- 15: Leitungsführungskanal
- 16: Untertrum
- 17: Umlenkbereich
- 18: Obertrum
- 19: Traverse
- 20: Verbindungsmittel
- 21: Anschlagpaar
- 22: Stecknut
- 23: Steckvorsprung
- 24: Steckelement
- 25: Steckpaar
- 26: Stecköffnung
- 27: Steckvorsprung
- 28: Traverssteg
- 29: Anschlusselement
- 30: Rasthakenpaar
- 31: Hinterschneidung
- 32: Anschlusssteg
- 33: Rastöffnung
- 34: Anschlussnut
- 35: Leitungsführungskanalabschnitt
- b: Breite
- c: Breite
- 1: Längsrichtung
- q: Längsrichtung
- E: Schwenkebene
- α: Verschwenkwinkel

## Patentansprüche

1. Seitenwandsegment für eine Leitungsführungseinrichtung (2) aus verschwenkbar miteinander verbundenen Gliedern (3), die jeweils zwei gegenüberliegende Seitenteile (4) aufweisen, die in einer Schwenkebene (E) verschwenkbar mit den unmittelbar benachbarten Seitenteilen (4) verbunden sind und Anschläge (10) zur Begrenzung des Verschwenkwinkels (α) aufweisen, wobei mehrere miteinander verbundene, Seitenteile (4) das Seitenwandsegment (1) bilden, wobei die Seitenteile (4) durch einen in dessen Längsrichtung (1) verlaufenden, in der Schwenkebene (E) biegsamen Verbindungssteg (5) einstückig miteinander verbunden sind **dadurch gekennzeichnet, dass** die Seitenteile (4) jeweils einen im Wesentlichen senkrecht zu diesem Verbindungssteg (5) in der Schwenkebene (E) verlaufenden, in Längsschnitt der Seitenteile (4) T-förmigen Steg (6, 7) mit einem Fußsteg (8) und einem Quersteg (9) aufweisen, wobei der Fußsteg (8) mit dem Verbindungssteg (5) verbunden und der Quersteg (9) an einem dem Verbindungssteg (5) gegenüberliegenden Ende des Fußsteges (8) angeordnet ist und die in Längsrichtung (1) des Verbindungssteges (5) weisenden Stirnseiten der Querstege (9) die Anschläge (10) zur Begrenzung des Verschwenkwinkels (α) bilden.

2. Seitenwandsegment nach Anspruch 1, **dadurch gekennzeichnet, dass** die Stege (6, 7) plattenförmig mit parallel beabstandeten seitlichen Schmalseiten (13) und parallel beabstandeten großen Seitenflächen (14) ausgebildet sind, wobei die seitlichen Schmalseiten (13) jeweils parallel zu der Schwenkebene (E) angeordnet sind und sich die großen Seitenflächen (14) in einer Querrichtung erstrecken.

3. Seitenwandsegment nach Anspruch 2, **dadurch gekennzeichnet, dass** der Verbindungssteg (5) plattenförmig mit parallel beabstandeten seitlichen Schmalseiten (13) und parallel beabstandeten großen Seitenflächen (14) ausgebildet ist, wobei die seitlichen Schmalseiten (13) jeweils parallel zu der Schwenkebene (E) angeordnet sind und mit den Schmalseiten (13) der Stege (6, 7) in einer gemeinsamen Ebene verlaufen.

4. Seitenwandsegment nach einem der Ansprüche 1 bis 3, **dadurch gekennzeichnet, dass** die Stege (6, 7) jeweils gleich beabstandet zu ihren benachbarten Stegen sind und in einer Streckposition des Seitenwandsegmentes (1), in der der das Seitenwandsegment (1) gestreckt oder nahezu gestreckt ist, senkrecht zu dem Verbindungssteg (5) angeordnet sind

5. Seitenwandsegment nach einem der Ansprüche 1 bis 4, **dadurch gekennzeichnet**, das s sich die Stege als erste Stege (6) von einer ersten Seite des Verbindungssteges (5) aus erstrecken und deren jeweils paarig einander gegenüberliegenden Anschläge (10) in einer Streckposition des Seitenwandsegmentes (1), in der der das Seitenwandsegment (1) gestreckt oder nahezu gestreckt ist, aneinander anliegen.

6. Seitenwandsegment nach einem der Ansprüche 1 bis 5, **dadurch gekennzeichnet**, das s sich die Stege als zweite Stege von einer der ersten Seite abgewandten zweiten Seite des Verbindungssteges (5) aus erstrecken und deren jeweils paarig einander gegenüberliegenden Anschläge (10) in einer Biegeposition des Seitenwandsegmentes (1), in der der das Seitenwandsegment(1) in der Schwenkebene (E) gebogen ist, aneinander anliegen.

7. Seitenwandsegment nach Anspruch 6, **dadurch gekennzeichnet, dass** jeweils ein erster Steg (6) und ein zweiter Steg (7) bezüglich ihrer Fußstege (8) in einer Flucht zueinander angeordnet sind und einen Kreuzungspunkt (11) mit dem Verbindungssteges (5) bilden.

8. Seitenwandsegment nach Anspruch 6 oder 7, **dadurch gekennzeichnet, dass** der Verbindungssteg (5) bezüglich seiner relativen Lage zu den Anschlägen (10) der sich beidseitig von ihm erstreckenden Stegen (6, 7) außermittig zu den Anschläge (10) angeordnet ist, wobei die Anschläge (10) des ersten Steges (6) weiter als die des zweiten Steges (7) von dem Verbindungssteg (5) beabstandet sind.

9. Seitenwandsegment nach einem der Ansprüche 1 bis 8, **dadurch gekennzeichnet, dass** die an benachbarten Stegen (6, 7) angeordnete und einander zugewandte Anschläge (10) eine Steckverbindung ausbilden.

10. Seitenwandsegment nach einem der Ansprüche 1 bis 9, **dadurch gekennzeichnet, dass** endseitig des Verbindungssteges (5) als Steckelemente (24) ausgebildete Verbindungsmittel (20) zur Verbindung des Seitenwandsegmentes (1) mit in der Leitungsführungseinrichtung(2) benachbarten Seitenwandsegmenten (1) in einer Verbindungsposition vorgesehen sind, wobei in der Verbindungsposition zugewandte Steckelemente (24) benachbarten Seitenwandsegment (1) jeweils ein Steckpaar (25) bilden und in einer Steckrichtung senkrecht zur Schwenkebene (E) ineinander steckbar sind.

11. Seitenwandsegment nach einem der Ansprüche 1 bis 10, **dadurch gekennzeichnet, dass** die Stege (6, 7) jeweils an einander zugewandten Seitenflächen (14) ein Verbindungsmittel (20) zur Verbindung des Seitenwandsegmentes (1) mit der Traverse (19) zur Ausbildung eines Leitungsführungskanals (15) aufweisen.

12. Seitenwandsegment nach einem der Ansprüche 1 bis 11, **dadurch gekennzeichnet, dass** das Seitenwandsegment (1) in einer Ruheposition, in der es mechanisch unbelastet ist, eine gekrümmte Form mit einer in der Schwenkebene (E) liegende Krümmung aufweist.

13. Leitungsführungseinrichtung zur Führung von Schläuchen, Kabeln oder dergleichen in einem Leitungsführungskanal(15) aus verschwenkbar miteinander verbundenen Gliedern (3), die jeweils zwei gegenüberliegende Seitenteile (4) aufweisen, die in einer Schwenkebene (E) verschwenkbar mit den unmittelbar benachbarten Seitenteilen (4) verbunden sind und Anschläge (10) zur Begrenzung des Verschwenkwinkels (α) aufweisen, wobei mehrere miteinander verbundene Seitenteile (4) ein Seitenwandsegment (1) nach einem der Ansprüche 1 bis 12 bilden und zumindest ein Paar gegenüberliegender Seitenteile (4) durch eine Traverse (19) miteinander verbunden ist.

14. Leitungsführungseinrichtung nach Anspruch 13, **dadurch gekennzeichnet, dass** die Traverse (19) mindestens einen Traverssteg (26) oder einen umfänglich geschlossenen Leitungsführungskanalabschnitt (35) mit vorzugsweise rechtwinkligem Querschnitt sowie Anschlusselemente(29) aufweist, mittels derer der Traversensteg (28) oder der Leitungsführungskanalabschnitt (35) form- und/oder kraftschlüssig mit den Seitenwandsegmenten (1) verbindbar und von denselben lösbar ist.

15. Verfahren zur Herstellung eines Seitenwandsegmentes (1) gemäß einem der Ansprüche 1 bis 12 mit folgenden Verfahrensschritten:
Gießen, insbesondere Spritzgießen des Seitenwandsegmentes (1), wobei das Seitenwandsegment (1) eine in der Schwenkebene (E) gekrümmten Form aufweist, in der die Anschläge (10) beabstandet zueinander angeordnet sind,
Beaufschlagen des gegossenen Seitenwandsegmentes (1) in einer Spannform mit einer mechanischen Vorspannung, mittels derer das Seitenwandsegment (1) auf eine bestimmte in der Schwenkebene (E) liegende Krümmung gebracht wird, die kleiner oder gleich derjenigen des Seitenwandsegmentes (1) in der Biegeposition ist, oder mittels derer das Seitenwandsegment (1) auf eine gestreckte oder im Wesentlichen gestreckte Form gebogen wird und
Wärmebehandlung des Seitenwandsegmentes (1) in der Spannform unter einer Temperatur, unter der das mit der mechanischen Vorspannung beaufschlagte Seitenwandsegment (1) zumindest teilweise entspannt.

## Claims

1. Side wall segment for a line guiding device (2) consisting of links (3) connected to each other in pivoting fashion, each of which displays two opposite side parts (4) that are connected to the immediately adjacent side parts (4) in a manner permitting pivoting in a pivoting plane (E), and display stops (10) for limiting the pivoting angle (α), where multiple side parts (4) connected to each other form the side wall segment (1), where the side parts (4) are connected to each other in one piece by a connecting web (5) that runs in the longitudinal direction of the side wall segment (1) and is flexible in the pivoting plane (E), **characterized in that** the side parts (4) each display a web (6, 7), that has a T shape with respect to the longitudinal section of the side parts (4), running essentially perpendicularly to this connecting web (5) in the pivoting plane (E), with a base web (8) and a cross-web (9), where the base web (8) is connected to the connecting web (5) and the cross-web (9) is located on an end of the base web (8) opposite the connecting web (5), and the face ends of the cross-webs (9) pointing in the longitudinal direction (1) of the connecting web (5) form the stops (10) for limiting the pivoting angle (α).

2. Side wall segment according to Claim 1, **characterized in that** the webs (6, 7) are of plate-like design, with lateral narrow sides (13) spaced apart in parallel fashion and large side faces (14) spaced apart in parallel fashion, where the lateral narrow sides (13) are in each case arranged parallel to the pivoting plane (E) and the large side faces (14) extend in a transverse direction.

3. Side wall segment according to Claim 2, **characterized in that** the connecting web (5) is of plate-like design, with lateral narrow sides (13) spaced apart in parallel fashion and large side faces (14) spaced apart in parallel fashion, where the lateral narrow sides (13) are in each case located parallel to the pivoting plane (E) and lie in a common plane with the narrow sides (13) of the webs (6, 7).

4. Side wall segment according to one of Claims 1 to 3, **characterized in that** the webs (6, 7) are in each case an equal distance away from their adjacent webs, and arranged perpendicularly to the connecting web (5) when in a stretched position of the side wall segment (1), in which the side wall segment (1) is straight or almost straight.

5. Side wall segment according to one of Claims 1 to 4, **characterized in that** the webs extend from a first side of the connecting web (5) as first webs (6), and their stops (10) positioned opposite each other in pairs contact each other in a stretched position of the side wall segment (1), in which the side wall segment (1) is straight or almost straight.

6. Side wall segment according to one of Claims 1 to 5, **characterized in that** the webs extend from a second side of the connecting web (5) facing away from the first side as second webs, and their stops (10) positioned opposite each other in pairs contact each other in a bent position of the side wall segment (1), in which the side wall segment (1) is bent in the pivoting plane (E).

7. Side wall segment according to Claim 6, **characterized in that** one first web (6) and one second web (7) are in each case arranged in line with each other in reference to their base webs (8), and form a point of intersection (11) with the connecting web (5).

8. Side wall segment according to Claim 6 or 7, **characterized in that**, regarding its position relative to the stops (10) of the webs (6, 7) extending from it on both sides, the connecting web (5) is positioned eccentrically to the stops (10), where the stops (10) of the first web (6) are a greater distance away from the connecting web (5) than those of the second web (7).

9. Side wall segment according to one of Claims 1 to 8, **characterized in that** the stops (10) located on adjacent webs (6, 7) and facing towards each other form a plug-in connection.

10. Side wall segment according to one of Claims 1 to 9, **characterized in that** connecting means (20), designed as plug-in elements (24) for connecting the side wall segment (1) to adjacent side wall segments (1) in the line guiding device (2) in a connecting position, are provided on the end side of the connecting web (5), where plug-in elements (24) of adjacent side wall segments (1) that face towards each other in the connecting position form a plug-and-socket pair (25) and can be inserted into each other in an insertion direction perpendicular to the pivoting plane (E).

11. Side wall segment according to one of Claims 1 to 10, **characterized in that** the webs (6, 7) in each case display a connecting means (20), on side faces (14) facing towards each other, for connecting the side wall segment (1) to the cross-piece (19) to form a line guiding channel (15).

12. Side wall segment according to one of Claims 1 to 11, **characterized in that**, when in a resting position in which it is mechanically unstressed, the side wall segment (1) displays a curved shape with a curvature lying in the pivoting plane (E).

13. Line guiding device for guiding hoses, cables or similar in a line guiding channel (15) comprising links (3) connected to each other in pivoting fashion, which each display two opposite side parts (4) that are connected to the immediately adjacent side parts (4) in a manner permitting pivoting in a pivoting plane (E), and stops (10) for limiting the pivoting angle (α), where multiple side parts (4) connected to each other form a side wall segment (1) according to one of Claims 1 to 12, and at least one pair of opposite side parts (4) is connected by a cross-piece (19) .

14. Line guiding device according to Claim 13, **characterized in that** the cross-piece (19) displays at least one cross-piece web (26) or a peripherally closed line guiding channel section (35) with a preferably rectangular cross-section, as well as connecting elements (29), by means of which the cross-piece web (28) or the line guiding channel section (35) can be connected to the side wall segments (1) in positive and/or non-positive fashion, and disconnected from them again.

15. Method for manufacturing a side wall segment (1) according to one of Claims 1 to 12, comprising the following process steps:
Molding, especially injection molding, of the side wall segment (1), where the side wall segment (1) displays a curved shape in the pivoting plane (E), in which the stops (10) are spaced apart from each other,
Stressing of the molded side wall segment (1) with a mechanical pre-tension in a tensioning mold, by means of which the side wall segment (1) is given a specific curvature lying in the pivoting plane (E) that is smaller than or equal to that of the side wall segment (1) in the bent position, or by means of which the side wall segment (1) is given a straight or essentially straight shape, and
Heat treatment of the side wall segment (1) in the tensioning mold at a temperature at which the side wall segment (1) stressed with the mechanical pre-tension at least partially relaxes.

## Revendications

1. Segment de paroi latérale pour dispositif de guidage de ligne (2) consistant en membres (3) articulés l'un à l'autre et chacun comportant deux pièces latérales (4) opposées reliées avec les pièces latérales (4) directement adjacentes d'une manière pivotante dans un plan de pivotement (E) et comportant des butées (10) pour limiter l'angle de pivotement (α), plusieurs de pièces latérales (4) reliées l'une avec l'autre formant le segment de paroi latérale (1), les pièces latérales (4) étant reliée de manière monobloc par une traverse de jonction (5) s'étendant en la direction longitudinale du segment de paroi et étant flexible dans le plan de pivotement (E), **caractérisé en ce que** les pièces latérales (4) respectivement comportent une âme (6, 7) avec une forme de T relative à la section longitudinale des pièces latérales (4) qui s'étend essentiellement perpendiculairement à la traverse de jonction (5) dans le plan de pivotement (E) et qui comporte une âme de pied (8) et une âme transversale (9), l'âme de pied (8) étant reliée avec la traverse de jonction (5) et l'âme transversale (9) étant disposée à l'extrémité de l'âme de pied (8) opposée à la traverse de jonction (5), et les fronts des âmes transversales (9) montrant dans la direction longitudinale (1) de la traverse de jonction (5) formant les butées (10) pour limiter l'angle de pivotement (α).

2. Segment de paroi latérale selon la revendication 1, **caractérisé en ce que** les âmes (6, 7) sont en forme de plaque avec des côtés étroits (13) latéraux écartés de manière parallèle et avec des faces latérales majeures (14) écartées de manière parallèle, lesdits côtés étroits latéraux (13) étant respectivement disposés parallèlement au plan de pivotement (E) et les faces latérales majeures (14) s'étendant en une direction transversale.

3. Segment de paroi latérale selon la revendication 2, **caractérisé en ce que** la traverse de jonction (5) est en forme de plaque avec des côtés étroits (13) latéraux écartés de manière parallèle et avec des faces latérales majeures (14) écartées de manière parallèle, lesdits côtés étroits latéraux (13) étant disposés respectivement parallèlement au plan de pivotement (E) et s'étendant dans un plan commun avec les côtés étroits (13) des âmes (6, 7).

4. Segment de paroi latérale selon l'une des revendications 1 à 3, **caractérisé en ce que** les âmes (6, 7) sont respectivement équidistant de ses âmes adjacentes et sont disposées perpendiculairement à la traverse de jonction (5) dans une position d'allongement du segment de paroi latérale (1) dans laquelle le segment de paroi latérale (1) est allongé ou presque allongé.

5. Segment de paroi latérale selon l'une des revendications 1à 4, **caractérisé en ce que** les âmes qui font fonction de premières âmes (6) s'étendent d'un premier côté de la traverse de jonction (5) et **en ce que** leurs butées à paires opposées (10) sont adjacentes l'une à l'autre dans une position d'allongement du segment de paroi latérale (1) dans laquelle le segment de paroi latérale (1) est allongé ou presque allongé.

6. Segment de paroi latérale selon l'une des revendications 1à 5, **caractérisé en ce que** les âmes qui font fonction de deuxièmes âmes (6) s'étendent d'un deuxième côté de la traverse de jonction (5) détourné du premier côté et **en ce que** leurs butées à paires opposées (10) sont adjacentes l'une à l'autre dans une position de courbement du segment de paroi latérale (1) dans laquelle le segment de paroi latérale (1) est courbé dans le plan de pivotement (E).

7. Segment de paroi latérale selon la revendication 6, **caractérisé en ce que** une première âme (6) et une deuxième âme (7) sont alignées l'une par rapport à l'autre concernant leur âmes de pied (8) et forment un croisement (11) avec la traverse de jonction (5).

8. Segment de paroi latérale selon la revendication 6 ou 7, **caractérisé en ce que**, concernant sa position relative par rapport aux butées (10) des âmes (6, 7) s'étendant de sa deux côtés, la traverse de jonction (5) est disposée d'une manière excentrique par rapport aux butées (10) tandis que les butées (10) de la première âme (6) sont écartées de la traverse de jonction (5) plus loin que celles de la deuxième âme (7).

9. Segment de paroi latérale selon l'une des revendications 1 à 8, **caractérisé en ce que** les butées (10) arrangées sur les âmes (6, 7) adjacentes et en face l'une de l'autre forment un connecteur mâle-femelle.

10. Segment de paroi latérale selon l'une des revendications 1 à 9, **caractérisé en ce que** des moyens de connexion (20) en forme de connecteurs (24) sont prévus, dans une position de connexion, à l'extrémité de la traverse de jonction (5) pour la connexion du segment de paroi latérale (1) à des segments de paroi latérale (1) adjacents dans le dispositif de guidage de ligne (2), les connecteurs (24) des segments de paroi latérale (1) adjacents et en face l'un de l'autre dans la position de connexion respectivement formant une paire de connecteurs (25) et pouvant être enfichés l'un dans l'autre en une direction d'enfichage perpendiculaire au plan de pivotement (E).

11. Segment de paroi latérale selon l'une des revendications 1 à 10, **caractérisé en ce que** les âmes (6, 7) respectivement comportent sur des surfaces latérales (14) en face l'une de l'autre un moyen de connexion (20) pour la connexion du segment de paroi latérale (1) à la traverse (19) pour former un canal de guidage de ligne (15).

12. Segment de paroi latérale selon l'une des revendications 1 à 11, **caractérisé en ce que**, le segment de paroi latérale (1) dans une position de repos, dans laquelle il n'est pas sollicité mécaniquement, a une forme courbée avec une courbure située dans le plan de pivotement (E).

13. Dispositif de guidage de ligne pour le guidage de tuyaux, de câbles ou d'autres choses semblables dans un canal de guidage de ligne (15) consistant en membres (3) articulés l'un à l'autre et respectivement comportant deux pièces latérales (4) opposées reliées avec les pièces latérales (4) directement adjacentes d'une manière pivotante dans un plan de pivotement (E) et comportant des butées (10) pour limiter l'angle de pivotement (α), plusieurs pièces latérales (4) reliées l'une avec l'autre formant un segment de paroi latérale (1) selon l'une des revendications 1 à 12 et au moins une paire de pièces latérales (4) étant reliée par une traverse (19).

14. Dispositif de guidage de ligne selon la revendication 13, **caractérisé en ce que** la traverse (19) comporte au moins une âme de traverse (26) ou une section du canal de guidage de ligne (35) fermée à la circonférence et ayant de préférence une section transversale rectangulaire ainsi que des éléments de connexion (29) au moyen desquels l'âme de traverse (28) ou la section du canal de guidage de ligne (35) peuvent être connectées aux et détachées des segments de paroi latérale (1) d'une manière positive et/ou par adhérence.

15. Procédé de production de segment à paroi latérale selon l'une des revendications 1 à 12, comprenant les étapes suivantes :
le moulage et en particulier le moulage par injection du segment de paroi latérale (1), le segment de paroi latérale (1) ayant une forme courbée dans le plan de pivotement (E) dans lequel les butées (10) sont écartées l'une de l'autre,
la sollicitation du segment de paroi latérale (1) moulé dans une moule de serrage à prétension mécanique au moyen de laquelle le segment de paroi latérale (1) est donné une certaine courbure située dans le plan de pivotement (E) et inférieure ou égale à celle du segment de paroi latérale (1) dans la position courbée, ou au moyen de laquelle le segment de paroi latérale (1) est courbée en forme allongée ou essentiellement allongée et
le traitement thermique du segment de paroi latérale (1) dans la moule de serrage sous une température à laquelle le segment de paroi latérale (1) sollicité en la prétension mécanique se détend au moins partiellement.
